# EUROPÄISCHE PATENTSCHRIFT

(11) **EP 3 897 448 B1**
(45) Veröffentlichungstag und Bekanntmachung des Hinweises auf die Patenterteilung: **19.11.2025**
(21) Anmeldenummer: 19832871.8
(22) Anmeldetag: 16.12.2019
(51) Int. Cl.: A61C 8/00

(54) **DENTALIMPLANTAT**
DENTAL IMPLANT
IMPLANT DENTAIRE

(30) Priorität: 22.12.2018 DE 102018222901
(43) Veröffentlichungstag der Anmeldung: 27.10.2021
(73) Patentinhaber: TRIMPOU, Georgia, 60528 Frankfurt am Main (DE)
(72) Erfinder: TRIMPOU, Georgia, 60528 Frankfurt am Main (DE)
(74) Vertreter: Tergau & Walkenhorst Intellectual Property GmbH
(86) Internationale Anmeldenummer: PCT/EP2019/085432
(87) Internationale Veröffentlichungsnummer: WO 2020/127106

(56) Entgegenhaltungen:
- EP-A1- 1 710 325
- WO-A1-2010/003433
- DE-U1- 202013 006 276
- US-A- 4 431 416
- US-A- 5 209 659
- ZA-B- 200 606 187

## Beschreibung

Die Erfindung bezieht sich auf ein zur Einbringung in den Kieferknochen eines Patienten vorgesehenes Dentalimplantat mit einem Grundkörper, der in einem apikal angeordneten Schraubenbereich an seiner Außenseite mit einem umlaufenden Außengewinde versehen ist, gemäß dem Oberbegriff des Anspruchs 1.

Die orale Implantologie entwickelte sich in den letzten vier Dekaden zunehmend von einer Spezial- zu einer Routinetherapie nach Zahnverlust. Die hierbei verwendeten Dentalimplantate sind in vielfältigen Formen bekannt. Sie werden meist durch Ein-schrauben an Stelle eines extrahierten oder ausgefallenen Zahnes in den Kieferknochen des Patienten eingesetzt, um dort nach einer Einheilphase von drei bis vier Monaten ein als Zahnersatz dienendes prothetisches Aufbauteil oder eine Krone zu halten. Dazu ist ein derartiges Dentalimplantat üblicherweise als geeignet geformter Metallkörper ausgebildet und in der Art eines Stiftes geformt und weist am apikalen Ende ein zumeist selbstschneidendes Schraubengewinde auf, mit welchem der Stift in das entsprechend präparierte Implantatbett im Kieferknochen eingesetzt wird. Im Falle von ausreichendem Knochenangebot besteht dann eine hohe Wahrscheinlichkeit für die so genannte Osseointegration der Implantate, die einen von Kaukräften funktionell belasteten Zahnersatz nachhaltig verankern können. Die derzeit häufigste Indikation und damit Anwendung (60 - 80 %) von oralen Implantaten ist die Versorgung des Einzelzahnverlustes mit einem Implantat, auf dem eine Einzelzahnkrone befestigt ist.

Für die Einheilung des Implantats in den Kieferknochen und damit für den Behandlungserfolg insgesamt wesentlich sind die so genannte Primärstabilität einerseits und die Sekundärstabilität andererseits. Beim Einsetzen des Implantats wird üblicherweise an der dazu vorgesehenen Stelle, bevorzugt durch Bohren, eine runde Knochenkavität oder Aushöhlung im Kieferknochen geschaffen (Osteotemie). In diese wird die Implantat-Schraube eingedreht. Dabei verankern sich die Gewindeflanken in dem periimplantären Knochen rein mechanisch, wohingegen eine feste, rigide Verbindung (auch als Osseointegration bezeichnet) zwischen dem Knochen und der Implantatoberfläche unmittelbar nach der Implantatinsertion noch fehlt. Die auch als Primärstabilität bezeichnete initiale mechanische Verankerung hängt somit unter anderem von der Gestaltung der Gewinde ab.

Nach der Implantatinsertion setzen Umbauvorgänge des periimplantären Knochens ein. Durch die Osteotemie bildet sich in Abhängigkeit vom applizierten Trauma und den Insertionsvorgangs eine die periimplantäre Umgebungsschicht im Knochen, welche das Trauma nicht überlebt hat ("death zone"). Diese Schicht wird zunächst durch Osteoklasten abgebaut und führt bei ausgedehnten "death zones" nach zwei bis vier Wochen Heilungszeit zu einer Reduktion der mechanischen Verankerung des Implantats (Sekundärstabilität). Letzteres gefährdet den klinischen Erfolg bzw. die Osseointegration von sofort belasteten bzw. prothetisch versorgten Implantaten, insbesondere bei Einzelzahnimplantaten sowie bei Implantaten, die nach Zahnextraktion oder traumatischen Zahnverlust sofort in die Zahnalveolen inseriert und sofort mit Einzelkronen versorgt werden.

Im Zuge der fortschreitenden Einheilung, in der Regel etwa in einem Zeitbereich von 8 bis 12 Wochen nach der Insertion, findet dann die eigentlich Osseointegration statt. Dabei entsteht ein fester, rigider Verbund zwischen der Implantatoberfläche und dem Knochengewebe. Dieser Verbund ist letztlich für die Belastbarkeit des gesetzten Implantats, beispielsweise gegenüber den eingeleiteten Kaukräften, wesentlich.

Ein weiterer erheblicher Faktor für den langfristigen Behandlungserfolg beim Setzen eines Dentalimplantats ist die Möglichkeit der Entstehung einer auch als Periimplantitis bezeichneten Infektion oder Entzündung des umgebenden Knochengewebes. Das Risiko eines Implantatverlusts nach einer erfolgreichen Osseointegration korreliert nämlich stark mit dem Zustand des periimplantären Weichgewebes, das als Barriere zwischen der keimbesiedelten Mundhöhle und dem Alveolarknochen wirkt. Die Anhaftung des oralen Weichgewebes an der Implantatoberfläche und die dadurch bewirkte Abdichtfunktion gegenüber der Mundhöhle kann durch eine Mehrzahl von Faktoren negativ beeinflusst werden. Klinisch tritt im Infektionsfall zunächst eine Entzündung des Weichgewebes auf. Diese als Mukositis bezeichnete Erkrankung ähnelt der Gingivitis darin, dass sie beide wieder vollständig ausheilen können. Bei einer andauernden oder sich ausbreitenden Mukositis dehnt sich jedoch der entzündliche Prozess auf den periimplantären Knochen aus und resultiert in einem irreversiblen Abbau des krestalen Knochens. Dieses Krankheitsstadium wird als Periimplantitis bezeichnet. Die Mukositis ist daher als Vorstadium zur Periimplantitis zu betrachten.

Trotz vielfältiger Therapiekonzepte kann ein Fortschreiten der Periimplantitis kaum verhindert werden, weil die üblicherweise zur Begünstigung der Osseointegration rau ausgestaltete Implantatoberfläche als unerwünschter Nebeneffekt die Bildung und Anheftung eines Biofilms und damit eine Keimansiedelung begünstigt.

Dentalimplantate der oben genannten Art sind beispielsweise bekannt aus der WO 2010/003433 A1, der US 5,209,659, der EP 1 710 325 A1, der EP 0 641 549 A2 oder der ZA 200606187 B. Ein Dentalimplantat gemäß dem Oberbegriff von Anspruch 1 ist bekannt aus der US 4,431,416.

Der Erfindung liegt nunmehr die Aufgabe zugrunde, ein Dentalimplantat der oben genannten Art anzugeben, das einerseits eine besonders hohe Primär- und Sekundärstabilität ermöglicht und damit den Einheilprozess besonders begünstigt, andererseits aber auf besonders günstige Weise die Eindämmung oder Behandlung einer im umgebenden Knochengewebe möglicherweise auftretenden Entzündung erleichtert.

Diese Aufgabe wird erfindungsgemäß gelöst mit den Merkmalen des Anspruchs 1.

Die erfindungsgemäße Dental-Implantatschraube umfasst somit im Wesentlichen zwei Bereiche, nämlich einerseits den am apikalen Ende vorgesehen und mit einem Außengewinde versehenen, ausschließlich auf einen "unteren" Teilbereich der Gesamtlänge des Implantats beschränkten Verankerungsbereich und andererseits den an diesen Verankerungsbereich in Längsrichtung gesehen unmittelbar anschließenden gewindefrei und damit hinsichtlich der makroskopischen Struktur vergleichsweise glatt ausgeführten "oberen" Schaftbereich. Dabei ist der Grundkörper im Schaftbereich mit einem sich in Längsrichtung des Grundkörpers gesehen verjüngenden Querschnitt, also insbesondere konisch, ausgeführt.

Die Erfindung geht dabei von der Überlegung aus, dass einerseits die für den Behandlungserfolg wesentliche Primär- und Sekundärstabilität des inserierten Dentalimplantats ganz wesentlich durch das im unteren Endbereich des Grundkörpers vorgesehene Gewinde und dessen Verankerung im Knochengewebe geprägt ist; im Gegensatz dazu sind die Beiträge von im oberen Schaftbereich liegenden Gewindegängen zur Stabilität weitgehend unerheblich. Andererseits stellen Gewindegänge im oberen Schaftbereich aber gerade bei Maßnahmen gegen bestehende oder sich anbahnende Entzündungen eher hinderlich, da sie die Anhaftung von Biofilm begünstigen und den therapeutischen Zugriff auf den Verbindungsbereich zwischen Knochengewebe und Implantatoberfläche erschweren.

Daher sollte der Grundkörper des Implantats in seinem "oberen", enossalen Schaftbereich konsequent frei von Gewindegängen gehalten werden.

Insbesondere ist dabei vorteilhafterweise berücksichtigt, dass gerade bei der Insertion in den harten Knochen vergleichsweise tiefe Gewindeflanken (also die Ausbildung des Außengewindes als vergleichsweise "aggressives", selbstschneidendes Gewinde) unvorteilhaft sind. Diese erfordern ein entsprechendes, meist komplexes Osteotomieprotokoll - zum Teil mit Gewindescheiden im harten Knochen - um das Eindrehen der Implantatschraube ohne zu hohe Eindrehmomente (< 100 - 150 Ncm) zu ermöglichen. Daher werden Implantatschrauben mit tiefen Gewindeflanken vor allem im weichen Knochen - vornehmlich im Oberkiefer auftretend - klinisch angewandt. Eine weitere klinische Anwendung ist die Implantatinsertion unmittelbar nach Zahnverlust, also das Einschrauben des Implantats in die Zahnalveole. Aufgrund der Inkongruenz zwischen der konisch geformten Zahnalveole und der runden Implantatschraube können meist ohnehin nur die ersten 4 bis 5 mm der Implantatschraube in den Knochen eingeschraubt werden, wobei der Rest der Schraube keinen Kontakt mehr mit den knöchernen Aveolenwänden hat. Daher werden vor allem an der Spitze der Implantatschraube tiefe Gewindeflanken angebracht um auch unmittelbar nach Zahnverlust eine hohe mechanische Primärstabilität von Implantaten erzielen zu können. Letzteres ermöglicht einen sofortigen und idealen Wundverschluss der Zahnalveole mit einer am Implantat verankerten Krone und eine sofort nach Zahnverlust funktionell und ästhetisch hochwertige prothetische Versorgung des Patienten.

Des Weiteren ist vorteilhafterweise berücksichtigt, dass bei vollständiger Osseointegration, also nach einer Einheilzeit von üblicherweise etwa 8 bis 12 Wochen, ein fester, rigider Verbund zwischen Knochengewebe und Implantatoberfläche entsteht. Dieser feste Verbund zwischen periimplantärem Knochen und der Implantatoberfläche ermöglicht gerade im oberen Schaftbereich des Implantat-Grundkörpers eine von der Gewindegestaltung unabhängige mechanische Verankerungsqualität des Implantats. Mit anderen Worten weisen Implantate mit kleinen Gewindeflanken oder völlig fehlendem Gewinde nach vollständiger Osseointegration keine Indikationseinschränkungen bezüglich ihrer mechanischen Belastbarkeit durch prothetische Versorgungskonzepte auf. Dies wird auch durch das beobachtete klinische Langzeitverhalten von kurzen Implantat-Schrauben mit konventionellen Implantatdurchmessern bestätigt. Trotz erheblich reduzierter Implantat-Oberfläche stellt sich auch bei diesen nach der vollständigen Osseointegration eine identische mechanische Belastungsfähigkeit wie bei längeren Implantaten ein.

Aus diesen Erkenntnissen wird geschlossen, dass der für die Stabilität erforderliche Gewindebereich auf den apikalen Bereich des Implantat-Grundkörpers begrenzt werden kann, ohne dass hierdurch zu starke Beeinträchtigungen der Belastbarkeit des Implantats in Kauf genommen werden müssten. Dies kann genutzt werden, um das Dentalimplantat in seinem "oberen" Schaftbereich konsequent zur Begünstigung eventuell erforderlicher Behandlungsmaßnahmen bei auftretenden Entzündungen auszugestalten.

Die Entzündung des periimplantären Weichgewebes (Mukositis) kann durch unterschiedliche Faktoren ausgelöst und/oder unterhalten werden. Die Ätiologie der Mukositis ist damit multifaktoriell. Für ihre Pathogenese kann bereits ein einzelner Faktor ursächlich sein. Ausprägung und Progredienz der Mukositis werden darüber hinaus vom Zusammenwirken einer Mehrzahl von Faktoren befördert, von denen vermutlich bis dato noch nicht alle identifiziert werden konnten. Aufgrund der vergleichsweise starken Verbreitung der Mukositis von 64,5 % und der daraus entstehenden Periimplantitis (12,9 %) gewinnen auch prophylaktisch wirkende Therapien oder Maßnahmen stark an Bedeutung, um einen vorzeitigen Implantat- und/oder Knochenverlust vermeiden zu können.

Derartige prophylaktische Ansätze haben die Vermeidung bzw. Minimierung einer Reizung oder Entzündung des periimplantären Weichgewebes zum Ziel. Daher ist es erstrebenswert, die dafür verantwortlichen potentiellen Risikofaktoren und Indikatoren für eine Mukositis und Periimplantitis zu identifizieren. In der oralen Implantologie bestehen unter anderem folgende Risiken für die Entstehung einer Mukositis: ein nicht optimal biokompatibler Werkstoff, eine raue Oberfläche, eine mit Toxinen oder Metallpartikeln kontaminierte Flüssigkeit sowie ein schwer entfernbarer Biofilm. Ein traumatischer oder ein nicht korrekt ausgeführter Therapieschritt bei der Herstellung von am Implantat verankertem Zahnersatz erhöht ebenfalls das Risiko für eine Mukositis.

Ein sehr häufig angewandter Therapieansatz bei auftretenden Entzündungen ist die Glättung der Implantatoberfläche im oberen Schaftbereich, was die Entfernung von vorhandenen Gewindeflanken mit einschließt (so genannte Implantoplastik). Nachteilig sind hierzu die Kontamination des periimplantären Weich- und Knochengewebes mit beim Schleifen anfallenden Ti-Spänen und die Reduktion der mechanischen Festigkeit. Darüber hinaus ist die Explantation oder Entfernung des Implantats häufig das Mittel der Wahl, um einen sich weiter ausbreitenden Knochenabbau zu vermeiden. Letzterer würde zeitversetzt ebenfalls zum Implantatverlust führen.

Die Indikation für die Entfernung eines Implantats ist entweder durch dessen technisches und/oder biologisches Versagen gegeben oder bei einer meist psycho-somatisch überlagerten Implantat-Phobie des Patienten. Das technische Versagen tritt häufig als Spätkomplikation in Folge einer Materialermüdung auf. Die Implantate frakturieren oder zeigen Rissbildungen an der Verbindungsstelle zwischen Implantat und prothetischen Pfosten (Abutment). Beides lässt eine funktionelle Belastung des Implantats nicht mehr zu. Das biologische Versagen eines Implantats ist hingegen wie oben beschrieben oftmals eine Folge der progredienten Entzündung des periimplantären Weichgewebes hat (Mukositis/Periimplantitis). Aufgrund der Demaskierung der Implantatoberfläche entstehen zudem teils ästhetisch nicht akzeptable Situationen, die entweder mit chirurgischen Interventionen zur Geweberegeneration oder mit der Explantation begegnet werden. Des Weiteren verhindert eine frühzeitige Explantation einen fortschreitenden und irreversiblen periimplantäten Gewebeverlust. In seltenen Fällen entwickeln Patienten Ängsten und Phobien nach einer Implantatinsertion. Sie wünschen trotz erfolgreicher Osseointegration eine "Metallfreiheit" in ihrem Kieferknochen oder schreiben die Ursache Ihren Erkrankungen diesen Implantaten zu. Beides führt zu dem Wunsch einer vorzeitigen Entfernung des Implantats trotz nicht eingetretenem technischen und/oder biologischen Versagen des Implantats.

Falls aus einem der genannten Gründe die Entfernung eines vollständig oder eines noch teilweise osseointegrierten Implantats erforderlich ist, kann dies mit unterschiedlichen Techniken durchgeführt werden. Klinische Erfahrungen zeigen, dass die Schwierigkeit und der damit einhergehende Knochenverlust mit der osseointegrierten Implantatlänge und - durchmesser sowie der Länge und/oder Ausprägung der Gewindeflanken zunehmen. Alle genannten Parameter erhöhen die Kontaktfläche zum angewachsenen Knochengewebe und somit das zu überwindende Drehmoment zum Herausdrehen der Implantatschraube. Auch Trepanfräsen zerstören mit zunehmender Implantatlänge und - durchmesser mehr periimplantäres Knochengewebe. Kurze und schmale Implantate sowie Implantate ohne Gewinde oder sehr kurze Gewindeflanken erleichtern hingegen das Herausdrehen einer zu entfernenden Implantatschraube. Ein minimaler periimplantärer Knochenverlust kann dadurch angenommen werden.

Den genannten Erkenntnissen wird vorliegend dadurch Rechnung getragen, dass die Implantatschraube in ihrem "oberen" oder enossalen Schaftbereich von vornherein gewindefrei ausgestaltet ist. Im Falle eines therapeutischen Eingriffs wegen eines der genannten Gründe ist somit die Entfernung von Gewindegängen von vornherein nicht erforderlich, und die Gefahr einer Kontamination oder Belastung des umgebenden Gewebes durch anfallende Metallspäne oder dergleichen ist vermieden.

Mit anderen Worten nutzt die Erfindung die Erkenntnis, dass die wesentlichen Beiträge zur Stabilität und mechanischen Belastbarkeit des Implantats durch den apikalen Endbereich des Schraubgewindes erfolgen, dazu, dass der obere, enossale Schaftbereich gewindefrei gehalten werden kann und sollte. Dies begünstigt bei notwendig werdenden therapeutischen Maßnahmen den Zugang zur Implantatoberfläche, erleichtert im Bedarfsfall die Entfernung des inserierten Implantats und reduziert das Risiko einer Belastung des umgebenden Gewebes durch Metallspäne. Dementsprechend sollte der das Schraubgewinde tragende Endbereich und somit das Gewinde selbst in Längsrichtung des Implantats gesehen vorzugsweise auf eine Länge von höchstens 4mm, vorzugsweise höchstens 3 mm, beschränkt sein.

Vorteilhafte Ausgestaltungen der Erfindung sind Gegenstand der Unteransprüche.

In ganz besonders bevorzugter Ausführung ist der Schaftbereich des Grundkörpers mit einer im Hinblick auf die gewünschten Eigenschaften geeignet gewählten Außenoberfläche, bevorzugt mit maschinierter oder polierter Außenoberfläche ausgeführt.

In makroskopischer Sicht ist der Grundkörper im Schaftbereich gewindefrei und somit glatt ausgeführt. In mikroskopischer Sicht ist der Grundköper im Schaftbereich vorteilhafterweise aber auch durch seine Oberflächenstruktur besonders geeignet für die angestrebte Osseointegration ausgeführt. Dazu weist der Grundkörper im Schaftbereich ganz besonders bevorzugt eine Außenoberfläche mit einer Rauheit mit einem Rauheitswert Ra von mindestens 1 µm auf. Bevorzugt sollte der Rauheitswert Ra zudem nicht mehr als 3,5 µm betragen. Besonders bevorzugt ist für die Außenoberfläche ein Rauheitswert Ra von zwischen 1,5 µm und 3,5 µm vorgesehen. In alternativer oder zusätzlicher vorteilhafter Weiterbildung weist der Grundkörper in seinem Schaftbereich aber auch eine hinsichtlich ihrer Struktur für die Osseointegration besonders günstige Oberfläche auf. Dazu weist der gewindefreie Teil des enossalen Implantatkörpers bevorzugt eine Oberfläche mit einem stochastischen oder deterministischen Muster auf.

In zusätzlicher oder alternativer vorteilhafter Ausgestaltung ist der Grundkörper für eine noch weiter verbesserte Osseointegration ausgeführt, indem der gewindefreie Teil oder Schaftbereich des enossalen Implantatkörpers eine beschichtete oder physikalisch, chemisch und/oder optisch behandelte, vorzugsweise biokompatible Oberfläche aufweist. In weiterer vorteilhafter Ausgestaltung kann die Oberfläche des Schaftbereichs auch eine Kombination oder einen Gradienten von einzelnen oder allen der vorstehend beschriebenen Oberflächenmodifikationen aufweisen.

Der Grundkörper des Dentalimplantat ist vorteilhafterweise gezielt für die Bereitstellung sowohl von Schraubenbereich als auch von gewindefrei gehaltenem Schaftbereich ausgeführt. Dazu weist der Schraubenbereich vorteilhafterweise eine Länge von höchstens 40 %, bevorzugt höchstens 1/3, vorzugsweise höchstens ¼, der Gesamtlänge des Grundkörpers auf. Dementsprechend und korrespondierend dazu weist der gewindelos ausgeführte Schaftbereich vorteilhafterweise eine Länge von mindestens 60 %, bevorzugt von mindestens 2/3, vorzugsweise mindestens ¾, der Gesamtlänge des Grundkörpers auf.

Die erfindungsgemäß vorgesehene Kombination des räumlich begrenzten Schraubenbereichs mit dem gewindefrei gehaltenen Schaftbereich kommt besonders vorteilhaft zum Tragen bei Implantaten vergleichsweise großer Gesamtlänge. Besonders bevorzugt weist der Grundkörper daher eine Gesamtlänge von mindestens 6 mm, besonders bevorzugt von mindestens 8 mm auf.

Der Schraubenbereich weist vorteilhafterweise allgemein, ganz besonders bevorzugt aber in Kombination mit den genannten Längenwerten für den Grundkörper insgesamt, eine Länge von höchstens 4 mm, vorzugsweise höchstens 3 mm, auf. Dementsprechend und in als eigenständig erfinderisch angesehener alternativer oder zusätzlicher vorteilhafter Ausgestaltung weist das Außengewinde höchstens vier, ganz besonders bevorzugt und im Hinblick auf die überraschenderweise damit erreichbare Primärstabilität ebenfalls als eigenständig erfinderisch angesehener Ausgestaltung höchstens drei, Gewindegänge auf. Unter "Gewindegang" eines Schraubengewindes ist in diesem Zusammenhang der Teil des Schraubengewindes zu verstehen, der, ausgehend von einem beliebigen Punkt des Schraubengewindes, bei einem einmaligen vollständigen Umlauf um den Gewindekern herum durchlaufen wird.

In besonders bevorzugter Weiterbildung ist das Implantat besonders geeignet für die Sofortversorgung eines Patienten mit Einzelzahnkronen, welche keine Lastverteilung auf mehrere, durch prothetische Konstruktionen (Brücken, Stege, etc.) verbundene Implantate zulässt, ausgeführt. Dazu ist das Gewinde im Schraubenbereich vorteilhafterweise als so genanntes "aggressives" Gewinde ausgeführt, welches vor allem an der Implantatspitze (am Apex) vergleichsweise tiefe Gewindeflanken aufweist. Damit ist auch im weichen Knochen eine gute Primärstabilität des Implantats zu erzielen.

In weiterer vorteilhafter Ausgestaltung weist der Grundkörper im Schaftbereich einen runden oder einen ovalen Querschnitt auf.

Das Dentalimplantat kann als einteiliges Implantat ausgeführt sein, bei dem die prothetische Versorgung für den Patienten nach der Insertion des Grundkörpers in den Kieferknochen unmittelbar am Grundkörper angebracht wird. Alternativ und bevorzugt kann das Implantat aber auch zur Verwendung in einem zweiteiligen Implantatsystem vorgesehen sein, bei dem auf den inserierten Grundkörper zunächst ein so genanntes Abutment oder Aufbauteil aufgesetzt wird, das seinerseits die eigentliche prothetische Versorgung für den Patienten trägt. Der Grundkörper ist dabei vorzugsweise an seinem freien Ende des Schaftbereichs geeignet für die Verbindung mit dem Abutment ausgestaltet, d. h. an das jeweils vorgesehene Verbindungssystem angepasst.

Vorteilhafterweise ist der Grundkörper aus einem geeignet gewählten, biokompatiblen und für die Osseointegration geeigneten Material, besonders bevorzugt aus Titan, gebildet.

Die mit der Erfindung erzielten Vorteile bestehen insbesondere darin, dass durch die vorgesehene Kombination eines leidglich auf den apikalen Endbereich des Grundkörpers begrenzten mit einem Außengewinde versehenen Schraubenbereich mit dem im enossalen Bereich einerseits eine gute Primär- und Sekundärstabilität bei der Insertion und nach der Osseointegration eine auch hohen Ansprüchen genügende Belastbarkeit des Implantats erreichbar ist, wobei andererseits dennoch im Bedarfsfall und gerade bei auftretenden Entzündungen der therapeutische Zugriff besonders erleichtert ist.

Dadurch kann das Dentalimplantat mit besonders einfach gehaltenen Mitteln die folgenden fünf Auslegungskriterien besonders wirksam erfüllen:
1. Sofortversorgung von Einzelzahn-Implantaten: Unmittelbar nach dem Einsetzen von Einzelzahn-Implantaten kann eine Einzelzahnkrone in non-funktioneller Okklusion befestigt werden. Nach vollständiger Osseointegration des Implantats wird eine funktionelle Okklusion realisiert. Insbesondere falls der die Länge des Schraubenbereichs wie bevorzugt etwa 3 bis 4 mm beträgt und der Schraubenbereich mit vergleichsweise tiefen Gewindeflanken versehen ist, kann nach dem Einsetzen von Einzelzahn-Implantaten eine Einzelzahnkrone in non-funktioneller Okklusion befestigt werden. Weitere Gewindeanteile am Implantat sind nicht erforderlich. Die damit erzielte Primärstabilität reicht für die Sofortversorgung eines Einzelzahnimplantats aus.
2. Minimalinvasive Therapie bei Mukositis oder Periimplantitis: Im Falle einer eintretenden Erkrankung des periimplantären Gewebes (Mukositis/Periimplantitis) ist keine therapeutische Implantoplastik (Nivellierung und Glättung der Implantat-Oberfläche) erforderlich, da der zum Weichgewebe benachbarte Anteil des enossalen Implantatkörpers kein Gewinde aufweist. Auch bei einer progredient verlaufenen Periimplantitis ist bei einem mehrere mm betragenden periimplantären Knochenabbau bei diesem Makrodesign keine Implantoplastik erforderlich.
3. Minimalinvasive Implantat-Entfernung: Die Entfernung eines osseointegrierten Implantats soll relativ unabhängig von dessen Länge und dessen Durchmesser nur einen minimalen periimplantären Knochenverlust verursachen. Die Entfernung des erfindungsgemäßen Implantatkörpers ist durch ein Ausdrehen aus dem Knochenlager relativ unabhängig von dessen Länge und dessen Durchmesser möglich, weil der überwiegende Anteil des Implantatkörpers kein Gewinde aufweist.
4. Atraumatische Implantat-Insertion: Die Insertion eines Implantats soll relativ unabhängig von dessen Länge, dessen Durchmesser und dessen Werkstoff eine geringe Reibung und damit eine geringe Erhitzung der koritikalen Kompakta des periimplantären Knochens verursachen. Die Insertion des erfindungsgemäßen Implantatkörpers erzeugt aufgrund des kurzen, mit einem Gewinde versehenen Anteils eine nur geringe Reibung und damit eine nur geringe Erhitzung der koritikalen Kompakta des periimplantären Knochens. Eine atraumatische Implantat-Insertion ist dadurch relativ unabhängig von der Implantatlänge, dem Implantatdurchmesser und dem Implantatwerkstoff.
5. Von der mechanischen Knochenbeschaffenheit unabhängiges Osteotomie-Protokoll: Die chirurgischen Arbeitsschritte und verwendeten Instrumente zur Schaffung der Knochenkavität zur Aufnahme eines Schrauben-Implantats sollen unabhängig von der biomechanischen Beschaffenheit des Knochens (harte vs. weiche Knochenqualität) sein, um die Knochenaufbereitung (= Osteotomie) zu vereinfachen. Die gemäß der Erfindung ausschließlich im apikalen Teil des Implantats auftretenden Gewinde greifen meistens im spongiosem Knochenmark und sind damit meistens im weichen Knochen lokalisiert. Ein Osteotomie-Protokoll kann hierdurch auf die Implantatinsertion im weichen Knochen reduziert werden, denn der restliche, von harten kortikalen Knochen umgebende Implantatanteil weist kein Gewinde und damit keine hohe Friktion im harten Knochen auf. Die chirurgischen Arbeitsschritte und verwendeten Instrumente zur Schaffung der Knochenkavität zur Aufnahme eines Schrauben-Implantats werden damit relativ unabhängig von der biomechanischen Beschaffenheit des Knochens (harte vs. weiche Knochenqualität).

Ein Ausführungsbeispiel der Erfindung wird anhand einer Zeichnung näher erläutert. Darin zeigen:
- FIG. 1: ein zur Einbringung in den Kieferknochen eines Patienten vorgesehenes Dentalimplantat, und
- FIG. 2: eine alternative Ausführungsform des Dentalimplantats nach FIG. 1.

Gleiche Teile sind in beiden Figuren mit denselben Bezugszeichen versehen.

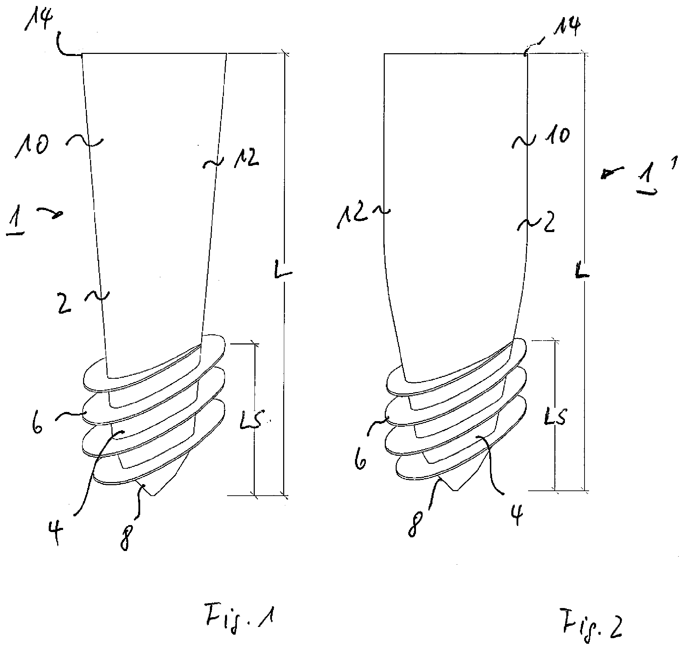

Das Dentalimplantat 1 gem. FIG. 1 ist zur Einbringung in den Kieferknochen eines Patienten vorgesehen und umfasst in an sich üblicher Ausgestaltung einen Grundkörper 2, der in einem apikal angeordneten Schraubenbereich 4 an seiner Außenseite mit einem umlaufenden Außengewinde 6 versehen ist. Das Dentalimplantat 1 ist einerseits dafür ausgelegt, eine besonders hohe Primär- und Sekundärstabilität zu gewährleisten und damit den Einheilprozess besonders zu begünstigen, wobei andererseits aber auch auf besonders günstige Weise bei bereits inseriertem Dentalimplantat 1 die Eindämmung oder Behandlung einer im umgebenden Knochengewebe möglicherweise auftretenden Entzündung erleichtert sein soll.

Dazu ist bei der Auslegung des Dentalimplantats 1 die Erkenntnis genutzt, dass die wesentlichen Beiträge zur Stabilität und mechanischen Belastbarkeit des Implantats durch den apikalen Endbereich 8 des Außengewindes 6 erfolgen. Dementsprechend kann der obere, enossale Schaftbereich 10 gewindefrei gehalten werden, ohne dass hierdurch eine nennenswerte Beeinträchtigung von Primär- oder Sekundärstabilität des inserierten Dentalimplantats 1 oder der Belastbarkeit nach erfolgter Osseointegration in Kauf zu nehmen wäre. Der Grundkörper 2 ist somit im zusätzlich zum Schraubenbereich 4 vorgesehenen, and den Schraubenbereich 4 unmittelbar angrenzenden proximalen Schaftbereich 10 gewindefrei ausgeführt. Dies begünstigt bei notwendig werdenden therapeutischen Maßnahmen den Zugang zur Implantatoberfläche, erleichtert im Bedarfsfall die Entfernung des inserierten Implantats und reduziert das Risiko einer Belastung des umgebenden Gewebes durch Metallspäne im Falle einer Implantoplastik (Nivellierung und Glättung der Implantat-Oberfläche).

Die Außenoberfläche 12 des Schaftbereichs 10 ist gezielt im Hinblick auf die im Sinne einer Begünstigung der Einheilung und/oder der Osseointegration gewünschten Eigenschaften geeignet ausgeführt. Sie könnte dazu maschiniert oder poliert ausgeführt sein. Im Ausführungsbeispiel ist die Außenoberfläche 12 im Schaftbereich 10 aber zwar in makroskopischer Sicht gewindefrei und somit glatt ausgeführt, weist in mikroskopischer Sicht aber auch eine für die Osseointegration besonders günstige Oberflächenstruktur auf. Dazu weist der Grundkörper 2 im Schaftbereich 10 eine Außenoberfläche 12 mit einer Rauheit mit einem Rauheitswert Ra von etwa 2 µm auf. Alternativ oder zusätzlich kann der Grundkörper 2 in seinem Schaftbereich 10 auch eine hinsichtlich ihrer Struktur, Beschichtung und/oder Vorbehandlung für die Osseointegration besonders günstige Oberfläche aufweisen.

Der Grundkörper 2 ist für die Bereitstellung sowohl von Schraubenbereich 4 als auch von gewindefrei gehaltenem Schaftbereich 10 ausgeführt. Im Ausführungsbeispiel weist der Grundkörper 2 eine Gesamtlänge L von etwa 11 mm auf. Demgegenüber ist der Schraubenbereich 4 auf eine Länge LS von etwa 3,2 mm begrenzt, wohingegen der gewindefrei ausgeführte Schaftbereich 10 eine Länge von etwa 7,8 mm einnimmt. Im Ausführungsbeispiel weist der Schraubenbereich 4 somit einen Anteil von 29 % an der Gesamtlänge L des Grundkörpers 2 auf, und der Schaftbereich nimmt einen Anteil von 71 % an der Gesamtlänge L des Grundkörpers 2 ein. Die angestrebten Grenzwerte von höchstens 40 % für den Schraubenbereich 4 und/oder mindestens 60 % für den gewindelosen Schaftbereich 10 sind somit im Ausführungsbeispiel deutlich eingehalten. Des Weiteren weist das Außengewinde 6 im Ausführungsbeispiel, wie den Darstellungen in Figs. 1 und 2 deutlich entnehmbar ist, lediglich 3 vollständige Gewindegänge auf.

Das Außengewinde 6 im Schraubenbereich 4 ist als so genanntes "aggressives" Gewinde ausgeführt, welches vor allem im apikalen Endbereich 8 vergleichsweise tiefe Gewindeflanken aufweist.

Der Grundkörper 2 ist im Ausführungsbeispiel sowohl im Schaftbereich 10 als auch im Schraubenbereich 4 mit einem sich in Längsrichtung des Grundkörpers 2 gesehen zum apikalen Endbereich 8 hin verjüngenden Querschnitt, also insbesondere konisch, ausgeführt.

Im Ausführungsbeispiel gem. FIG. 1 ist der Grundkörper 2 im Schaftbereich 10 mit rundem Querschnitt ausgeführt. Im alternativen Ausführungsbeispiel gem. FIG. 2 weist das Dentalimplantat 1' hingegen im Schaftbereich 10 des Grundkörpers 2 einen ovalen Querschnitt auf.

In beiden gezeigten Varianten kann das Dentalimplantat 1, 1' kann als einteiliges Implantat ausgeführt sein, bei dem die prothetische Versorgung für den Patienten nach der Insertion des Grundkörpers 2 in den Kieferknochen unmittelbar am Grundkörper 2 angebracht wird. Dargestellt sind jeweils jedoch die Varianten, in denen der jeweilige Grundkörper 2 zur Verwendung in einem zwei- oder mehrteiligen Implantatsystem vorgesehen ist, bei dem auf den inserierten Grundkörper 2 zunächst ein nicht näher dargestelltes Abutment aufgesetzt wird, das seinerseits die eigentliche prothetische Versorgung für den Patienten trägt. Der Grundkörper 2 ist dabei an seinem freien Ende 14 des Schaftbereichs 10 geeignet für die Verbindung mit dem Abutment ausgestaltet, d. h. an das jeweils vorgesehene Verbindungssystem angepasst.

In den dargestellten Beispielen ist der Grundkörper 2 aus einem geeignet gewählten, biokompatiblen und für die Osseointegration geeigneten Material, im Ausführungsbeispiel aus Titan, gebildet.

### Bezugszeichenliste

- 1: Dentalimplantat
- 2: Grundkörper
- 4: Schraubenbereich
- 6: Außengewinde
- 8: Apikaler Endbereich
- 10: Schaftbereich
- 12: Außenoberfläche
- 14: Freies Ende
- L: Gesamtlänge
- LS: Länge des Schaftbereichs

## Patentansprüche

1. Dentalimplantat (1, 1') mit einem Grundkörper (2), der in einem apikal angeordneten Schraubenbereich (4) an seiner Außenseite mit einem umlaufenden Außengewinde (6) versehen und in einem zusätzlich zum Schraubenbereich (4) vorgesehenen, an diesen angrenzenden ebenfalls für die Osseointegration vorgesehenen proximalen Schaftbereich (10) gewindefrei ausgeführt ist, wobei der Schraubenbereich (4) eine Länge (LS) von höchstens 4 mm, vorzugsweise höchstens 3 mm, aufweist, **dadurch gekennzeichnet, dass** der Grundkörper (2) im gewindefrei ausgeführten Schaftbereich (10) einen sich in Längsrichtung des Grundkörpers (2) gesehen verjüngenden Querschnitt aufweist.

2. Dentalimplantat (1, 1') nach Anspruch 1, das in seinem Schraubenbereich (4) mit einem selbstschneidenden Gewinde ausgeführt ist.

3. Dentalimplantat (1, 1') nach Anspruch 1 oder 2, dessen Schaftbereich (10) mit polierter Außenoberfläche (12) ausgeführt ist.

4. Dentalimplantat (1, 1') nach einem der Ansprüche 1 bis 3, dessen Grundkörper (2) im Schaftbereich (10) eine Außenoberfläche (12) mit einer Rauheit mit einem Rauheitswert Ra von mindestens 1 µm, vorzugsweise von 1,5 µm bis 3,5 µm, aufweist.

5. Dentalimplantat (1, 1') nach einem der Ansprüche 1 bis 4, dessen Grundkörper (2) im Schaftbereich (10) mit einer biokompatiblen Oberflächenstruktur oder Beschichtung versehen ist.

6. Dentalimplantat (1, 1') nach einem der Ansprüche 1 bis 5, dessen Schraubenbereich (4) eine Länge (LS) von höchstens 1/3, vorzugsweise höchstens ¼, der Gesamtlänge (L) des Grundkörpers (2) aufweist.

7. Dentalimplantat (1, 1') nach einem der Ansprüche 1 bis 6, dessen gewindelos ausgeführter Schaftbereich (10) eine Länge von mindestens 2/3, vorzugsweise mindestens ¾, der Gesamtlänge (L) des Grundkörpers (2) aufweist.

8. Dentalimplantat (1, 1'), insbesondere nach einem der Ansprüche 1 bis 7, dessen Außengewinde (6) höchstens vier, vorzugsweise höchstens drei, Gewindegänge aufweist.

9. Dentalimplantat (1, 1') nach einem der Ansprüche 1 bis 8, dessen Grundkörper (2) im Schaftbereich (10) einen runden Querschnitt aufweist.

10. Dentalimplantat (1, 1') nach einem der Ansprüche 1 bis 8, dessen Grundkörper (2) im Schaftbereich (10) einen ovalen Querschnitt aufweist.

## Claims

1. A dental implant (1, 1') comprising a main body (2) that is provided on its outside with a circumferential external thread (6) in an apically arranged screw region (4) and is designed to be thread-free in a proximal shaft region (10) which is provided in addition to the screw region (4), adjoins the screw region, and is likewise provided for osseointegration, wherein the screw region (4) has a length (LS) of at most 4 mm, preferably at most 3 mm, **characterised in that** the main body (2), in the thread-free shaft region (10), has a cross-section that tapers as viewed in the longitudinal direction of the main body (2).

2. The dental implant (1, 1') according to claim 1, which is designed in its screw region (4) with a self-tapping thread.

3. The dental implant (1, 1') according to claim 1 or 2, the shaft region (10) of which is designed with a polished outer surface (12).

4. The dental implant (1, 1') according to any one of claims 1 to 3, the main body (2) of which has an outer surface (12) in the shaft region (10) with a roughness with a roughness value Ra of at least 1 µm, preferably from 1.5 µm to 3.5 µm.

5. The dental implant (1, 1') according to any one of claims 1 to 4, the main body (2) of which is provided in the shaft region (10) with a biocompatible surface structure or coating.

6. The dental implant (1, 1') according to any one of claims 1 to 5, the screw region (4) of which has a length (LS) of at most ⅓, preferably at most ¼, of the total length (L) of the main body (2).

7. The dental implant (1, 1') according to any one of claims 1 to 6, the threadless shaft region (10) of which has a length of at least ²/₃, preferably at least ¾, of the total length (L) of the main body (2).

8. The dental implant (1, 1'), in particular according to any one of claims 1 to 7, the external thread (6) of which has at most four, preferably at most three, thread turns.

9. The dental implant (1, 1') according to any one of claims 1 to 8, the main body (2) of which has a round cross-section in the shaft region (10).

10. The dental implant (1, 1') according to any one of claims 1 to 8, the main body (2) of which has an oval cross-section in the shaft region (10).

## Revendications

1. Implant dentaire (1, 1') comprenant un corps de base (2) qui est doté d'un filetage mâle (6) périphérique dans une zone de vissage (4) disposée de manière apicale sur son côté externe et est conçu sans filet dans une zone de tige (10) prévue en plus de la partie de vissage (4) adjacente à celle-ci et également prévue pour l'ostéo-intégration, dans lequel la zone de vissage (4) présente une longueur (LS) d'au plus 4 mm, de préférence d'au plus 3 mm, **caractérisé en ce que** le corps de base (2) présente dans la partie de tige (10) conçue sans filet une section qui se rétrécit vu dans le sens longitudinal du corps de base (2).

2. Implant dentaire (1, 1') selon la revendication 1, qui est conçu avec un filetage auto-taraudant dans sa zone de vissage (4).

3. Implant dentaire (1, 1') selon la revendication 1 ou 2, dont la zone de tige (10) est conçue avec une surface extérieure (12) polie.

4. Implant dentaire (1, 1') selon l'une des revendications 1 à 3, dont le corps de base (2) présente dans la zone de tige (10) une surface extérieure (12) avec une rugosité ayant une valeur de rugosité Ra d'au moins 1 µm, de préférence de 1,5 µm jusqu'à 3,5 µm.

5. Implant dentaire (1, 1') selon l'une des revendications 1 à 4, dont le corps de base (2) est doté d'une structure de surface biocompatible ou d'un revêtement dans la zone de tige (10).

6. Implant dentaire (1, 1') selon l'une des revendications 1 à 5, dont la zone de vissage (4) présente une longueur (LS) d'au plus 1/3, de préférence d'au plus 1/4 de la longueur totale (L) du corps de base (2).

7. Implant dentaire (1, 1') selon l'une des revendications 1 à 6, dont la zone de tige (10) conçue sans filet présente une longueur d'au moins 2/3, de préférence d'au moins 3/4 de la longueur totale (L) du corps de base (2).

8. Implant dentaire (1, 1') selon l'une des revendications 1 à 7, dont le filetage mâle (6) présente au plus quatre, de préférence au plus trois, filets.

9. Implant dentaire (1, 1') selon l'une des revendications 1 à 8, dont le corps de base (2) présente une section ronde dans la zone de tige (10).

10. Implant dentaire (1, 1') selon l'une des revendications 1 à 8, dont le corps de base (2) présente une section ovale dans la zone de tige (10).
